# EUROPEAN PATENT APPLICATION

(11) **EP 2 172 698 A1**
(43) Date of publication of application: **07.04.2010**
(21) Application number: 08752048.2
(22) Date of filing: 24.04.2008
(51) Int. Cl.: F21V 8/00, G02B 6/00, H05B 37/02, F21Y 101/02

(54) **LIGHT EMITTING ELEMENT AND LIQUID CRYSTAL DISPLAY DEVICE**

(30) Priority: 26.04.2007 JP 2007117770
(71) Applicant: Sharp Kabushiki Kaisha, Osaka-shi, Osaka 545-8522 (JP)
(72) Inventor: AJICHI, Yuhsaku, Osaka-shi, Osaka 545-8522 (JP); MASUDA, Takeshi, Osaka-shi, Osaka 545-8522 (JP)
(74) Representative: Müller - Hoffmann & Partner
(86) International application number: PCT/JP2008/057949
(87) International publication number: WO 2008/136359

(57) **Abstract**

A light emitting element (1) includes: a plurality of light emitting diodes [3 (R1, G11, ...)] of two or more colors; and a light guide plate (4) for causing light from the respective plurality of light emitting diodes [3 (R1, G11, ...)] to surface-emit. The light emitting diodes are provided along the light guide plate (4) in a given order. The light guide plate (4) includes: a color mixing section (5) for mixing colors of light from the respective plurality of light emitting diodes [3 (R1, G11, ...)]; and a display section (6) for causing the light, which has been subjected to a color mixture by the color mixing section (5), to surface-emit. The plurality of light emitting diodes [3 (R1, G11, ...)] decrease in their respective luminous intensities from a center toward ends of the light guide plate (4). This allows obtaining a well color-mixed white light source without being colored in a color of light emitted from a light emitting diode provided on a side end surface side of a light guide plate.

## Description

### Technical Field

The present invention relates to a light emitting element including a light source unit provided with a plurality of light emitting diodes of two or more colors, the light emitting diodes being provided in a given order and a light guide plate for causing light from each of the plurality of light emitting diodes to surface-emit (emit in a form of plane emission), the light guide plate including a color mixing section for mixing colors of light from each of the plurality of light emitting diodes and a display section for causing the light mixed by the color mixing section to surface-emit.

### Background Art

In a liquid crystal display device, an illumination device is provided on front or back side of a liquid crystal panel. A light source which is provided on back side is generally referred to as a backlight. There are two types of backlights: (i) a direct backlight in which a light source is provided directly below a liquid crystal panel; and (ii) a backlight of edge light type in which a surface light source is obtained by providing a light source on an edge surface of a light guide plate for guiding light.

For either type, a cold cathode fluorescent tube is generally used as the light source. On the other hand, an illumination device whose light source is a mercury-free light emitting diode has been developed in recent years under the influence of environmental issues and the like.

In a case where a light emitting diode is used as the light source, a white illumination device is obtained by (i) using a white light emitting diode which is a combination of a blue light emitting diode and a yellow light emitting fluorescent substance or (ii) disposing a plurality of sets of monochromatic light emitting diodes each of which sets includes monochromatic light emitting diodes of respective different light emitting colors, such as red, green, and blue, so that colors of the respective monochromatic light emitting diodes are mixed. A backlight has attracted attention in recent years, in which backlight a combination of red, green, and blue monochromatic light emitting diodes, each capable of describing a broad range of color reproducibility, is employed.

For example, a liquid crystal television (LE-40M91B) is mass-produced in which red, green, and blue monochromatic light emitting diodes are used in combination in a direct backlight. According to a three-primary color light emitting diode set in which red, green, and blue light emitting diodes are used in combination, it is thus necessary to obtain white light by mixing colors of the light emitting diodes. Therefore, a uniform white backlight is obtained by providing a given gap between (i) a diffusing plate which is necessary to obtain uniform light and (ii) respective light emitting diodes.

In a backlight of edge light type, in order to obtain a uniform white backlight in which red, green, and blue monochromatic light emitting diodes are used in combination, it is necessary for light emitting diodes of same color to be disposed at intervals of not less than 10 mm, on the grounds that (i) each light emitting diode is about 3 mm in width and (ii) a packaging interval should be secured. For this reason, it is necessary to devise a countermeasure in which light emitting colors are mixed. Lumileds Lighting, LLC has proposed an arrangement in which a color mixing section for mixing light emitting colors is not used as a display section (Non Patent Literature 1). In this way, in order to obtain a uniform white backlight in which red, green, and blue monochromatic light emitting diodes are used in combination, it is necessary to provide a color mixing section for mixing light emitting colors and a display section for providing illumination in white.

### Citation List

Patent Literature 1
   Japanese Patent Application Publication, Tokukai, No. 2006-236951 A (Publication Date: September 7, 2006)
Patent Literature 2
   Japanese Patent Application Publication, Tokukai, No. 2003-187622 A (Publication Date: July 4, 2003)
Patent Literature 3
   Japanese Patent Application Publication, Tokukai, No. 2005-183124 A (Publication Date: July 7, 2005)
Patent Literature 4
   Japanese Patent Application Publication, Tokukai, No. 2005-332681 A (Publication Date: December 2, 2005)
Patent Literature 5
   Japanese Patent Application Publication, Tokukai, No. 2005-332680 A (Publication Date: December 2, 2005)
Non Patent Literature 1
   the March 31, 2003, issue of Nikkei Electronics No. 844, pp. 126-127

### Summary of Invention

As mentioned above, in an arrangement in which a light guide plate includes a display section and a color mixing section having a distance of not less than a certain distance, light which has been subjected to a color mixture by the color mixing section becomes white in the display section. However, the ratio of light emitted from a light emitting diode which is closest to the edge of the light guide plate becomes high on an edge surface of the light guide plate. Therefore, in a case where a color of the light emitting diode which is closest to the edge of the light guide plate is for example red, there occurs a problem that white light cannot be emitted through a discontinuous side end surface of the light guide plate but a slightly reddish light is emitted.

As for an angular characteristic of emission luminance of a light emitting diode, the light emitting diode does not emit light with uniform luminance at any angle. Light emitted in a front direction is the strongest in luminance, and the luminance decreases as an angle to the front direction increases. For example, in a case where light emitting diodes of three primary colors of R, G, and B are used, a well color-mixed white light source is obtained in front of the R light emitting diode. Specifically, (i) light obliquely emitted from G and B light emitting diodes which are neighbors on the right of the R light emitting diode and (ii) light obliquely emitted from G and B light emitting diodes which are neighbors on the left of the R light emitting diode are guided to a display section in front of the R light emitting diode. Then, R, G, and B light are mixed with each other, so that a white light source can be obtained. For example, on a right edge surface of a light guide plate, colors of light emitted obliquely to the right from each light emitting diode provided on the left side are mixed. However, since there is no light emitting diode provided on the right side, light amounts of respective colors other than a color of light emitted from the rightmost light emitting diode is small. Unfortunately, light emitted to the right from the rightmost light emitting diode is totally reflected from the right edge surface. As such, a light amount of the rightmost light emitting diode becomes large. This has caused a problem that a side end surface of a light guide plate is colored in a color of light emitted from a light emitting diode which is closest to the edge of the light guide plate.

The present invention has been made in view of the problems, and its object is to realize a light emitting element which allows obtaining of a well color-mixed white light source without being colored in a color of light emitted from a light emitting diode provided on a side end surface side of a light guide plate.

In order to solve the aforementioned problems, a light emitting element according to the present invention includes: a plurality of light sources of two or more colors; and a light guide plate for causing light from the respective plurality of light sources to surface-emit, the plurality of light sources being provided along the light guide plate in a given order, the light guide plate including: a color mixing section for mixing colors of light from the respective plurality of light sources; and a display section for causing the light, which has been subjected to a color mixture by the color mixing section, to surface-emit, the plurality of light sources decreasing in their respective luminous intensities from a center toward ends of the light guide plate.

According to the arrangement, it is possible, on a discontinuous side end surface of the light guide plate, for the mixing section sufficiently to carry out a color mixture with respect to the colors, without being colored in a color of a light emitting diode provided to face the side end surface. This allows a realization of an uncolored white light source.

Furthermore, according to the arrangement, it is possible to reduce the influence of light reflected from a wall of a device even if a distance from the wall to a light source is closed. This causes suppression of being colored and it is thus possible to realize a liquid crystal display device whose frame is narrow. For this reason, it is possible to obtain a liquid crystal display device whose frame is narrow by use of such a light emitting element as a backlight of a liquid crystal display device.

A light emitting element according to the present invention includes: a plurality of light sources of two or more colors; and a light guide plate for causing light from the respective plurality of light sources to surface-emit, the plurality of light sources being provided along one end part of the light guide plate in a given order, the light guide plate including: a color mixing section for mixing colors of light from the respective plurality of light sources; and a display section for causing the light, which has been subjected to a color mixture by the color mixing section, to surface-emit, the plurality of light sources being provided so that a central light source which is provided to face a center of one end part of the light guide plate is the highest in luminous intensity, and so that their luminous intensities decrease as they are away from the central light source.

The light emitting element of the present invention includes a plurality of light sources emitting light in two or more kinds of colors and a light guide plate for causing light of each of the plurality of light sources to be diffused and surface-emitted. In this light emitting element, the plurality of light sources are provided along one end part of the light guide plate in a given order. According to the plurality of light sources thus provided, the light source which is provided to face the center of the plurality of light sources is the highest in luminous intensity and the other light sources decrease in luminous intensity as they are closer to the light sources which are provided to face the ends of the plurality of light sources.

According to the arrangement, it is possible, on a discontinuous side end surface of the light guide plate, for the mixing section sufficiently to carry out a color mixture with respect to the colors, without being colored in a color of a light emitting diode provided to face the side end surface. For this reason, it is possible to obtain a liquid crystal display device whose frame is narrow by use of such a light emitting element as a backlight of a liquid crystal display device.

The light emitting element of the present invention may be arranged such that: each of the plurality of light sources is red, green, or blue light emitting diode; and the plurality of light sources are made up of a combination of the red, green, and blue light emitting diodes.

According to the arrangement, it is possible to realize a light emitting element including a light source capable of describing a broad range of color reproducibility.

Moreover, this allows obtaining of a well color-mixed white light source in which the plurality of light emitting diodes of red (R), green (G), and blue (B) are provided so that their luminous intensities decrease from a light emitting diode provided to face the center of the light guide plate toward light sources provided to face respective ends of the light guide plate.

The light emitting element of the present invention may further include luminous intensity adjustment means for adjusting a luminous intensity of each of the plurality of light sources by adjusting a current to be supplied to each of the plurality of light sources.

According to the arrangement, it is possible to realize a light emitting element which allows obtaining of a well color-mixed white light source without being colored in a color of light emitted from a light emitting diode provided on a discontinuous side end surface side of a light guide plate. Moreover, it is possible to reduce power consumption by decreasing a supplied current from a central light emitting diode which is provided to face a center of one end part of the light guide plate toward light emitting diodes which are provided away from the central light emitting diode.

The light emitting element of the present invention may further include luminous intensity adjustment means for adjusting a luminous intensity of each of the plurality of light sources by adjusting a pulse width of a current to be supplied to each of the plurality of light sources.

According to the arrangement, it is possible to realize a light emitting element which allows obtaining of a well color-mixed white light source without being colored in a color of light emitted from a light emitting diode provided on a discontinuous side end surface side of a light guide plate. Moreover, it is possible to reduce power consumption by decreasing a pulse width of a supplied current from a central light emitting diode which is provided to face a center of one end part of the light guide plate toward light emitting diodes which are provided away from the central light emitting diode.

The light emitting element of the present invention may also be arranged such that the plurality of light sources are provided along the light guide plate so that their luminous intensities decrease, in response to a supplied current, from a light source provided to face a center of the light guide plate toward light sources provided to face respective ends of the light guide plate.

According to the arrangement, it is possible to use light sources which are different in luminous intensity level when supplied with a certain current and it is thus unnecessary to change a current to be supplied from a driving circuit or the like to each of the plurality of light sources Accordingly, a driving circuit can be simply configured, thereby allowing a reduction in manufacturing costs.

A liquid crystal display device according to the present invention includes: a liquid crystal panel; and a backlight for illuminating the liquid crystal panel, the backlight being arranged to include a light emitting element of the present invention.

Provided with a light emitting element of the present invention as a backlight, a liquid crystal display device of the present invention is capable of directing well color-mixed white light to a liquid crystal panel. This allows an improvement in display quality.

For a fuller understanding of the nature and advantages of the invention, reference should be made to the ensuing detailed description taken in conjunction with the accompanying drawings.

### Brief Description of Drawings

Fig. 1

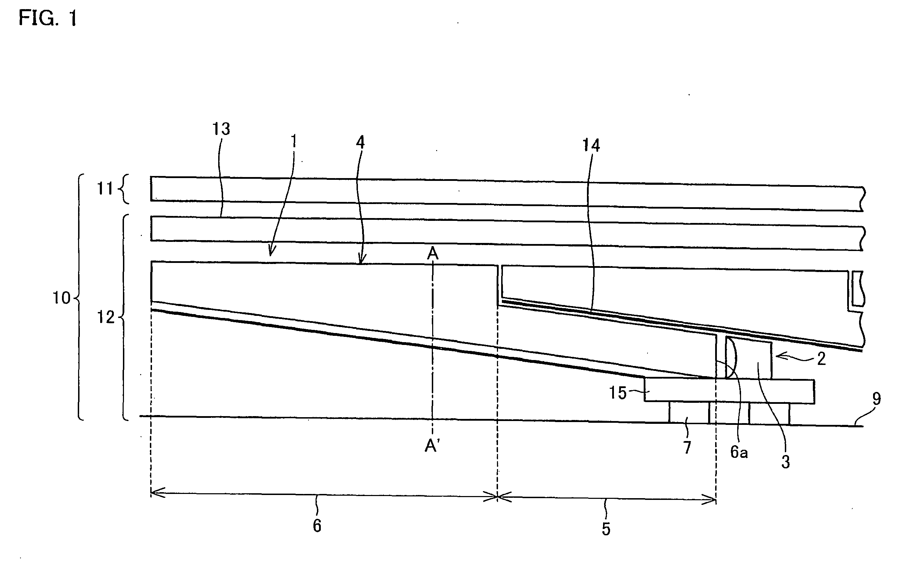

   Fig. 1 is a front elevational view illustrating how a light emitting element of the present embodiment is arranged.
Fig. 2

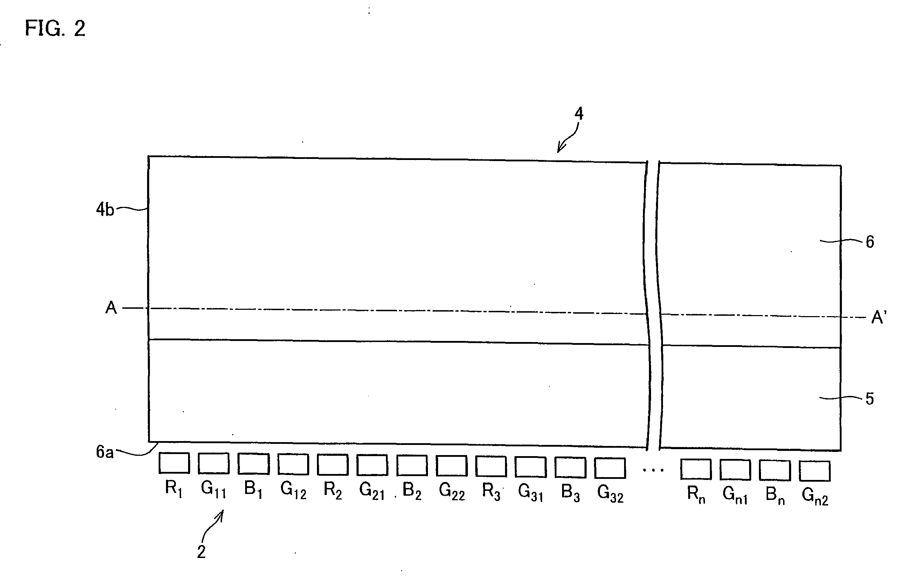

   Fig. 2 is a plan view illustrating the arrangement of the light emitting element.
Fig. 3

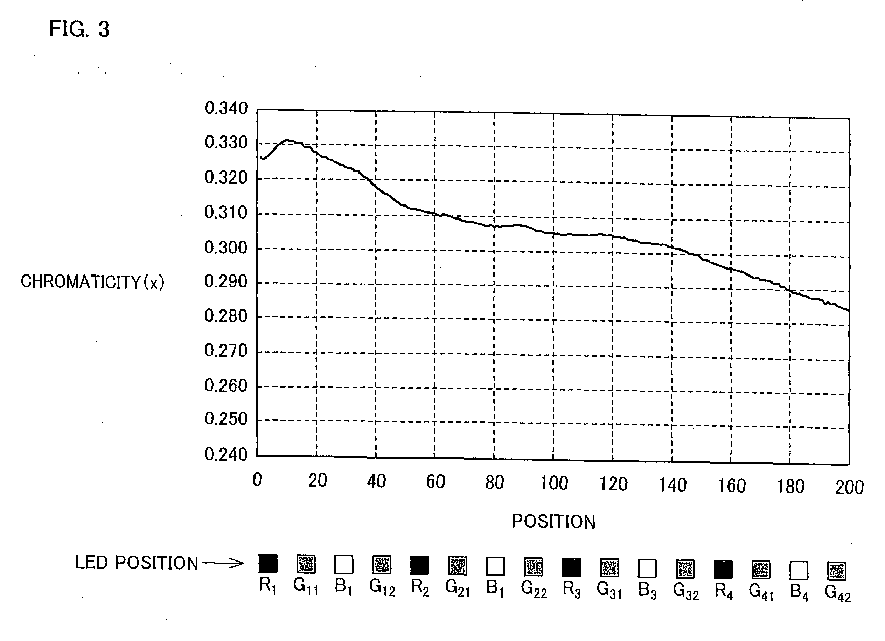

   Fig. 3 is a graph showing chromaticity "x" of a light guide plate which chromaticity "x" is obtained in a case where a luminous intensity of an LED is not decreased.
Fig. 4

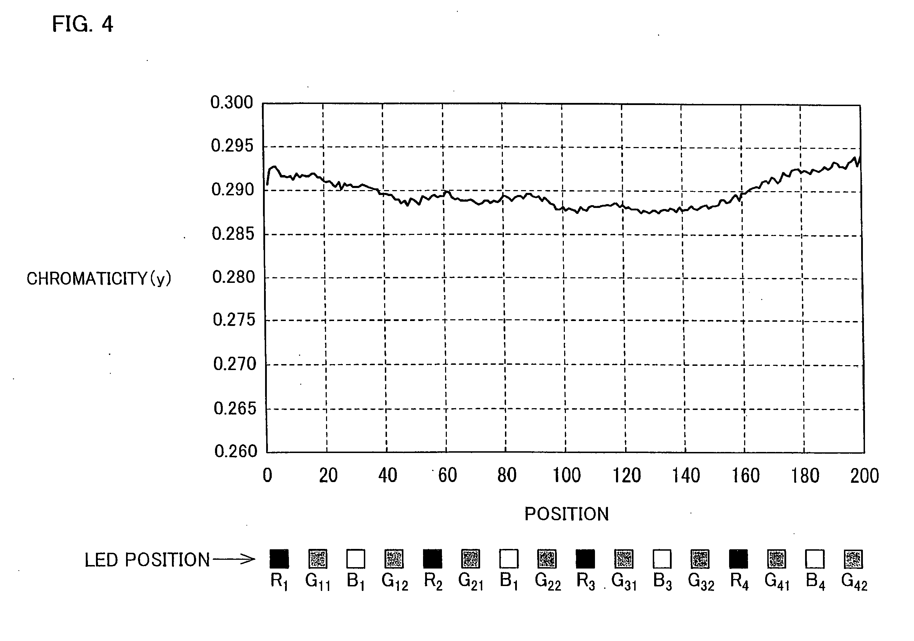

   Fig. 4 is a graph showing chromaticity "y" of a light guide plate which chromaticity "y" is obtained in a case where a luminous intensity of an LED is not decreased.

### Reference Signs List

- 1: Light emitting element
- 2: Optical unit
- 3: Light emitting diode
- 4: Light guide plate
- 4b: Side surface
- 5: Color mixing section
- 6: Display section
- 7: Driver (Luminous intensity adjustment means)
- 9: Chassis
- 10: Liquid crystal display device
- 11: Liquid crystal panel
- 12: Illumination device
- 13: Optical sheet
- 14: Reflecting sheet
- 15: Substrate

### Description of Embodiments

An embodiment of the present invention is described below with reference to Figs. 1 to 4. Fig. 1 is a front elevational view illustrating how a light emitting element 1 of the present embodiment is arranged. Fig. 2 is a plan view of the light emitting element 1.

A liquid crystal display device 10 of the present embodiment includes a light emitting element 1 which serves as a backlight. For example, as illustrated in Fig. 1, the liquid crystal display device 10 includes a liquid crystal panel 11 and an illumination device 12 which is provided to face the liquid crystal panel 11. The light emitting element 1 constituting this illumination device 12 is a light emitting element of the present invention. Light is irradiated from the illumination device 12 toward the liquid crystal panel 11. The liquid crystal panel 11 is not particularly limited, and therefore a publicly-known liquid crystal panel is appropriately usable.

The following describes the illumination device 12 of the present embodiment. For example, as illustrated in Fig. 1, the illumination device 12 includes a plurality of light guide plates 4 which are juxtaposed to each other. Specifically, each of the plurality of light guide plates 4 includes a display section 6 having a light emitting surface and a color mixing section 5 for guiding light from corresponding light emitting diodes 3 (light source) to the display section 6, and for mixing colors of light from the corresponding light emitting diodes 3. The display section 6 and the color mixing section 5 are different from each other in thickness, at least at a part where the display section 6 and the color mixing section 5 are connected together. Adjacent light guide plates 4 are provided such that a color mixing section 5 of one of the adjacent light guide plates 4 is located under a display section 6 of the other of the adjacent light guide plates 4. This causes light emitting surfaces of the plurality of light guide plates 4 to be provided so as to be flush with each other (a light emitting surface of the entire backlight 2 is provided). Such a structure of an illumination device is called a tandem structure. A reflecting sheet 14 is provided on a side of a surface of the light guide plate 4 which surface is opposite to a surface facing the liquid crystal panel 11.

An optical unit 2 is provided so as to face a light entrance section 6a of each of the plurality of light guide plates 4. The optical unit 2 includes a plurality of light emitting diodes 3 provided along the light entrance section 6a. Each of the light emitting diodes 3 is mounted on a substrate 15. Each of the plurality of light guide plates 4 includes a color mixing section 5 for mixing colors of light emitted from the respective light emitting diodes 3 and a display section 6 for causing the light which has been subjected to a color mixture by the color mixing section 5 to surface-emit. The display section 6 causes the incident light to surface-emit and to be directed to the liquid crystal panel 11. Therefore, the display section 6 can also be referred to as an emission section.

Drivers7 (luminous intensity adjustment means) for turning on respective light emitting diodes mounted on the substrate 15 are provided under the substrate 15. The drivers 7 supply currents or the like to the respective light emitting diodes 3 so as to control turning on of the respective light emitting diodes 3. Accordingly, the driver 7 can also be referred to as a light source controlling section. A chassis 9 is provided under the substrate 15 so as to contain these members. Moreover, an optical sheet 13 is provided above the light guide plate 4. The optical sheet 13 homogenizes and converges light emitted from the display section 6 of the light guide plate 4, and then directs the light thus converged to the liquid crystal panel 11. The following describes each of the constituents.

As mentioned above, the illumination device 12 includes the plurality of light guide plates 4, which are not particularly limited. For example, it is possible to use a publicly-known light guide plate as a light guide plate 4. Moreover, the plurality of light guide plates 4 do not need to have such a shape as illustrated in Figs. 1 and 2. Further, the number of the plurality of light guide plates 4 is not limited to a specific one but can be determined in accordance with a size of an object to be illuminated (e.g., the size of the liquid crystal panel 11) or the like. In a case where the number of light guide plates 4 is two or more, it is preferable that the light guide plates 4 be provided to be juxtaposed to each other. Furthermore, an interval between the light guide plates 4 is not particularly limited, but it is preferable that adjacent light guide plates 4 are provided with no space therebetween. With the arrangement, light which is superior in uniformity of luminance can be directed toward the liquid crystal panel 11 since the light guide plates 4 are uniformly distributed, with no space therebetween, in the illumination device 12.

The following describes the optical sheet 13. The optical sheet 13 is generally realized by a member such as (i) a diffusing plate for causing uniform light to be directed toward the liquid crystal panel 11, (ii) a diffusing sheet for converging and scattering light, (iii) a lens sheet for converging light so as to increase luminance in a front direction, or (iv) a polarized light reflecting sheet for increasing luminance of a liquid crystal display device by reflecting one polarization component of light and transmitting the other polarization component. These members are appropriately used in combination in accordance with price and performance of a liquid crystal display device.

The illumination device 12 is provided with the reflecting sheet 14 so as to reflect (i) part of light directed from the light guide plate 4 and (ii) light retroreflected from the optical sheet 13. More specifically, the reflecting sheet 14 reflects (i) the part of light directed from the light guide plate 4 and (ii) the light retroreflected from the optical sheet 13, and then the light thus reflected is directed, in a planer shape, toward the diffusing plate, the diffusing sheet, the lens sheet, or the polarized light reflecting sheet which constitutes the optical sheet 13. Note that the "planar shape" means a state in which the intensities of light are substantially identical to each other in a surface parallel with respect to the diffusing plate, the diffusing sheet, the lens sheet, or the polarized light reflecting sheet. It should be noted that, though a plurality of light guide plates 4 are provided with their respective reflecting sheets 14 in Fig. 1, the reflecting sheet 14 need not be identical to the light guide plate 4 in number. Namely, the reflecting sheet 14 can also be prepared by use of integral molding.

The light emitting diodes 3 are mounted on the substrate 15 and provided along the light entrance section 6a of the light guide plate 4. Here, red (R), green (G), and blue (B) LEDs are used as the respective light emitting diodes 3. As illustrated in Fig. 2, the LEDs are provided in the order of R1, G11, B 1, G12, R2, G21, B2, G22, ... Rn, Gn1, Bn, and Gn2 from a side surface 4b side of the light guide plate 4. Note that an alignment of R, G, B, and G constitute 1 group. At a right end part of the light guide plate 4, the LEDs are provided, in the order of Rn, Gn1, Bn, and Gn2, so that the rightmost LED "Gn2" is lower in luminous intensity than the other green LEDs. The R LEDs, G LEDs, and B LEDs increase in their respective luminous intensities from an end toward a center. That is, the R LEDs, G LEDs, and B LEDs increase in their luminous intensities from the leftmost end toward the center and decrease in their luminous intensities from the center toward the rightmost end.

It should be noted that how to combine LEDs and how to provide the LEDs are not limited to these. Furthermore, it is preferable that the LEDs be provided at a regular interval, but not limited to such a regular interval.

For example, as for how to align R, G, and B LEDs, other than the alignment in the order of "R, G, B, and G" which constitute 1 group, an alignment in the order of "G, R, B, and G" which constitute 1 group (see paragraph [0250] of Patent Literature 5) is also adoptable. It is possible to further improve a color mixture, by adopting such an alignment of R, G, and B LEDs.

As mentioned above, according to the present embodiment, the light emitting diodes 3 are provided so that the central light emitting diode 3, provided to face the center of the light entrance section 6a which is one end of the light guide plate 4, is the highest in luminous intensity, and the other light emitting diodes 3 decrease in luminous intensity as they are away from the central light emitting diode 3 (that is, from center toward the end of the light entrance section 6a).

In this case, it is possible to adjust a luminous intensity by a method of adjusting a current to be supplied to each of the LEDs from the driver 7. Other methods of adjusting a luminous intensity include a method of reducing a pulse width of a current to be supplied to each of the LEDs from the driver 7. In this way, the driver 7 serves as luminous intensity adjustment means, by controlling the driving of each of the LEDs.

Further, the following describes another method of setting a luminous intensity of each of the light emitting diodes 3 as mentioned above. Namely, in a case of selecting light emitting diodes to be provided in a line along the light entrance section 6a of the light guide plate 4, light emitting diodes ranked high in luminous intensity are selected as those provided to face the vicinity of the center of the light guide plate, whereas light emitting diodes ranked low in luminous intensity are selected as those provided to face the vicinity of end parts of the light guide plate. It should be noted that a light emitting diode ranked high in luminous intensity means a light emitting diode which has a higher light emitting luminous intensity in response to a supplied current, as compared with a light emitting diode ranked low in luminous intensity. That is, the rank of luminous intensity means a characteristic of a light emitting diode which characteristic is determined in accordance with high or low of a light emitting luminous intensity obtained when an identical current is supplied to the light emitting diode.

That is, according to the arrangement, the light emitting diodes 3 are provided along the light entrance section 6a of the light guide plate 4 so that their luminous intensities decrease, in response to a supplied current, from the light emitting diode 3 provided to face the center of the light entrance section 6a which is one end part of the light guide plate 4 toward the light emitting diodes 3 provided to face the ends of the light entrance section 6a.

With the arrangement, it is possible to set the luminous intensity of each of the light emitting diodes 3 to a target value, instead of changing a current to be supplied from the driver 7 to each of the light emitting diodes 3. For this reason, the driver 7 can be simply configured, thereby allowing a reduction in manufacturing costs.

The driver 7 is mounted on the substrate 15 on which the light emitting diode 3 is mounted. This causes a reduction in the number of substrates and a reduction in components such as connectors for connecting the substrates together. On this account, a cost reduction can be realized. Moreover, it is possible to further reduce the thickness of an illumination device because the number of the substrates is small.

It is preferable that the light emitting diodes 3 be provided as close as possible to the light guide plate 4. This allows an improvement in the efficiency in entering of light into the light guide plate 4 from the light emitting diodes 3. This ultimately allows a realization of a highly-efficient light emitting element.

The light guide plate 4 is made from a transparent resin such as PMMA (methyl methacrylate resin) or polycarbonate. It should be noted that the transparent resin is not limited to PMMA or polycarbonate, but any resin is applicable as long as it is transparent.

The light guide plate 4 is prepared by a molding method such as injection molding, extrusion molding, press molding with heat, or cutting. However, the present embodiment is not limited to the methods. Any processing method can be employed as long as it brings about a characteristic similar to that of any of the methods.

According to the light emitting diodes 3 of the present embodiment, the LED "R1" provided on the side surface 4b side of the light guide plate 4 is lower in luminous intensity than the other LEDs. This causes suppression of being colored in red in the end part on the side surface 4b side of the light guide plate 4, thereby allowing a realization of a white light source whose colors are uniform at any position in a surface from which the white light outgoes. In this case, it is possible to reduce a luminous intensity of the LED "R1", by (i) making a current to be supplied to the LED "R1" from the driver 7 lower than currents to be supplied to the other LEDs, (ii) making a pulse width of the current to be supplied to the LED "R1" narrower than pulse widths of the currents to be supplied to the other LEDs, or (iii) selecting and using, as the LED "R1", an LED ranked low in luminous intensity.

Fig. 3 is a graph showing chromaticity "x" of the cross section A-A' in Fig. 2 which chromaticity "x" is obtained in a case where the LED "R1" is not set to be lower in luminous intensity than the other LEDs. Fig. 4 is a graph showing chromaticity "y" of the cross section A-A' in Fig. 2 which chromaticity "y" is obtained in a case where a luminous intensity of the LED "R1" is not lowered. In Figs. 3 and 4, the horizontal axis shows positions, where the respective LEDs are provided, extending along the light entrance section 6a of the light guide plate 4. Scales of one (e.g., leftmost) end part, a center part, and the other (e.g., rightmost) end part of the light guide plate 4 are set to '0', '100', and '200', respectively.

As illustrated in these drawings, the end part of the light guide plate 4 is colored in red since the chromaticity 'x' of the end part is large. However, according to the present embodiment, it is possible that each of the chromaticity "x" and "y" is constant regardless of the position. This allows a realization of a white illumination device whose colors are uniform.

The description has dealt with an example of making the LED "R1" provided at the end lower in luminous intensity than the other LEDs. However, the present invention is not limited to this.

For example, it is also possible to provide an arrangement in which the LEDs decrease in luminous intensity from the center toward the end of the light guide plate with gradations such as R1 < R2 < R3 ..., G11 < G12 < G21 < G22 ..., and B1 < B2 < B3 ....

In another embodiment of the present invention, scatterer is attached to the side surface 4b of the end part of the light guide plate 4. An adhesive or a white reflecting sheet exemplifies the scattering body. The scatterer causes the light which enters into the light guide plate 4 from the LED "R1" to be scattered instead of being totally reflected from the side surface 4b. This causes a reduction in light amount of the LED "R1" in the end part of the light guide plate 4. For this reason, it is possible to suppress the problem that the display section 6 in the end part of the light guide plate 4 is colored in red, thereby allowing a realization of a white illumination device whose colors are uniform. It is also possible to achieve the effect similar to the arrangement in which the scatterer is attached to the side surface 4b, by causing the conditions for the total reflection not to be met with the use of (i) a method in which the side surface 4b is subjected to micro-fabrication or (ii) a method in which the side surface 4b is realized by an absorbing surface. The micro-fabrication is realized by (i) causing the side surface 4b to be filed, (ii) causing the side surface 4b to be subjected to sandblast, or (iii) causing the side surface 4b to be subjected to process which is carried out to a prism or a lens. The absorbing surface is obtained by causing the side surface 4b to be subjected to black printing or by causing black paper to be attached to the side surface 4b.

In a further embodiment of the present invention, a scatterer is attached to front or back side of the color mixing section 5 in the end part of the light guide plate 4. The scatterer scatters the light which enters into the light guide plate 4 from the LED "R1", thereby causing the conditions for total reflection not to be met. This causes a reduction in light amount of the LED "R1" in the end part of the light guide plate. For this reason, it is possible to suppress the problem that the display section 6 in the end part of the light guide plate 4 is colored in red, thereby allowing a realization of a white illumination device whose colors are uniform. It is also possible to achieve the effect similar to the arrangement in which the scatterer is attached to front or back side of the color mixing section 5 in the end part of the light guide plate 4, by causing the conditions for the total reflection not to be met with the use of a method in which the side surface 4b is subjected to micro-fabrication.

The invention is not limited to the description of the embodiments above, but may be altered within the scope of the claims. An embodiment based on a proper combination of technical means disclosed in different embodiments is encompassed in the technical scope of the invention.

A light emitting element of the present invention may include: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit, the light emitting element being provided with luminous intensity adjustment means for adjusting a luminous intensity of each of the plurality of light emitting diodes so that luminous intensities of the plurality of light emitting diodes decrease from a light emitting diode provided to face a center of the light guide plate toward light emitting diodes provided to face respective ends of the light guide plate.

According to the arrangement, it is possible to realize a light emitting element which allows obtaining of a well color-mixed white light source without being colored in a color of light emitted from a light emitting diode provided on a discontinuous side end surface side of a light guide plate. Such a light emitting element allows obtaining of a liquid crystal display device whose frame is narrow.

The light emitting element of the present invention is preferably arranged such that the light source unit is provided with red, green, and blue light emitting diodes.

According to the arrangement, it is possible to realize a light emitting element including a light source capable of describing a broad range of color reproducibility.

The light emitting element of the present invention is preferably arranged such that the luminous intensity adjustment means adjusts a luminous intensity of each of the plurality of light emitting diodes by adjusting a current to be supplied to each of the plurality of light emitting diodes.

According to the arrangement, it is possible to realize a light emitting element which allows obtaining of a well color-mixed white light source without being colored in a color of light emitted from a light emitting diode provided on a discontinuous side end surface side of a light guide plate. Moreover, it is possible to reduce power consumption by decreasing a supplied current from a central light emitting diode which is provided to face a center of the light guide plate toward light emitting diodes which are provided to face respective ends of the light guide plate.

The light emitting element of the present invention is preferably arranged such that the luminous intensity adjustment means adjusts a luminous intensity of each of the plurality of light emitting diodes by adjusting a pulse width of a current to be supplied to each of the plurality of light emitting diodes.

According to the arrangement, it is possible to realize a light emitting element which allows obtaining of a well color-mixed white light source without being colored in a color of light emitted from a light emitting diode provided on a discontinuous side end surface side of a light guide plate. Moreover, it is possible to reduce power consumption by decreasing a pulse width of a supplied current from a central light emitting diode which is provided to face a center of the light guide plate toward light emitting diodes which are provided to face respective ends of the light guide plate.

The light emitting element of the present invention is preferably arranged such that: the luminous intensity adjustment means is constituted by the plurality of light emitting diodes; and the plurality of light emitting diodes are provided so that their luminous intensities decrease, in response to a supplied current, from a light emitting diode provided to face a center of the light guide plate toward light emitting diodes provided to face respective ends of the light guide plate.

According to the arrangement, light emitting diodes ranked high in luminous intensity are used as those provided to face the vicinity of the center of the light guide plate, whereas light emitting diodes ranked low in luminous intensity are used as those provided to face the vicinity of end parts of the light guide plate. This saves the need of selecting light emitting diodes and thus a cost reduction in light emitting diodes can be realized.

A light emitting element of the present invention may include: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit, the light emitting element being provided with scatterer attached to a side surface of the light guide plate.

According to the arrangement, the scatterer attached to the side surface of the light guide plate causes the light which enters into the light guide plate from a light emitting diode to be scattered instead of being totally reflected from the side surface in the end part of the light guide plate. This allows suppression of being colored in a color of light emitted from a light emitting diode provided at the end and it is thus possible to realize a white light source whose colors are uniform.

A light emitting element of the present invention may include: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit, micro-fabrication being provided for a side surface of the light guide plate.

According to the arrangement, the micro-fabricated side surface of the light guide plate causes the light which enters into the light guide plate from a light emitting diode to be scattered instead of being totally reflected from the side surface in the end part of the light guide plate. This allows suppression of being colored in a color of light emitted from a light emitting diode provided at the end and it is thus possible to realize a white light source whose colors are uniform.

A light emitting element of the present invention may include: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit, the light emitting element being provided with scatterer attached to front or back side of the color mixing section in the end part of the light guide plate.

According to the arrangement, the scatterer attached to front or back side of the color mixing section in the end part of the light guide plate causes the light which enters into the light guide plate from a light emitting diode to be scattered in the end part of the light guide plate and this causes a reduction in light amount of the light to be guided to the display section. This allows suppression of being colored in a color of light emitted from a light emitting diode provided at the end and it is thus possible to realize a white light source whose colors are uniform.

A light emitting element of the present invention may include: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit, micro-fabrication being provided for front or back side of the color mixing section in the end part of the light guide plate.

According to the arrangement, micro-fabricated front or back side of the color mixing section in the end part of the light guide plate causes the light which enters into the light guide plate from a light emitting diode to be scattered in the end part of the light guide plate and this causes a reduction in light amount of the light to be guided to the display section. This allows suppression of being colored in a color of light emitted from a light emitting diode provided at the end and it is thus possible to realize a white light source whose colors are uniform.

A light emitting element of the present invention may include: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit, a side surface of the light guide plate serving as an absorbing surface.

According to the arrangement, the absorbing side surface of the light guide plate causes the light which enters into the light guide plate from a light emitting diode to be absorbed on the side surface in the end part of the light guide plate. This allows suppression of being colored in a color of light emitted from a light emitting diode provided at the end and it is thus possible to realize a white light source whose colors are uniform.

The embodiments discussed in the foregoing description of embodiments and concrete examples serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is applicable to a light emitting element including: a light source unit provided with a plurality of light emitting diodes of two or more colors, the light emitting diodes being provided in a given order; and a light guide plate for causing light from the respective plurality of light emitting diodes to surface-emit, the light guide plate including: a color mixing section for mixing colors of light from the respective plurality of light emitting diodes; and a display section for causing the light, which has been subjected to a color mixture by the color mixing section, to surface-emit. Furthermore, a light emitting element of the present invention is applicable to a backlight of a liquid crystal display device.

## Claims

1. A light emitting element comprising:
a plurality of light sources of two or more colors; and
a light guide plate for causing light from the respective plurality of light sources to surface-emit, the plurality of light sources being provided along the light guide plate in a given order,
the light guide plate including:
a color mixing section for mixing colors of light from the respective plurality of light sources; and
a display section for causing the light, which has been subjected to a color mixture by the color mixing section, to surface-emit,
the plurality of light sources decreasing in their respective luminous intensities from a center toward ends of the light guide plate.

2. A light emitting element comprising:
a plurality of light sources of two or more colors; and
a light guide plate for causing light from the respective plurality of light sources to surface-emit, the plurality of light sources being provided along one end part of the light guide plate in a given order,
the light guide plate including:
a color mixing section for mixing colors of light from the respective plurality of light sources; and
a display section for causing the light, which has been subjected to a color mixture by the color mixing section, to surface-emit,
the plurality of light sources being provided so that a central light source which is provided to face a center of one end part of the light guide plate is the highest in luminous intensity, and so that their luminous intensities decrease as they are away from the central light source.

3. The light emitting element as set forth in claim 1 or 2, wherein:
each of the plurality of light sources is red, green, or blue light emitting diode; and
the plurality of light sources are made up of a combination of the red, green, and blue light emitting diodes.

4. The light emitting element as set forth in any one of claims 1 to 3, further comprising luminous intensity adjustment means for adjusting a luminous intensity of each of the plurality of light sources by adjusting a current to be supplied to each of the plurality of light sources.

5. The light emitting element as set forth in any one of claims 1 to 3, further comprising luminous intensity adjustment means for adjusting a luminous intensity of each of the plurality of light sources by adjusting a pulse width of a current to be supplied to each of the plurality of light sources.

6. The light emitting element as set forth in any one of claims 1 to 3, wherein
the plurality of light sources are provided along the light guide plate so that their luminous intensities decrease, in response to a supplied current, from a light source provided to face a center of the light guide plate toward light sources provided to face respective ends of the light guide plate.

7. A liquid crystal display device comprising:
a liquid crystal panel; and
a backlight for illuminating the liquid crystal panel,
the backlight being arranged to include a light emitting element as set forth in any one of claims 1 to 6.
